# EUROPÄISCHE PATENTANMELDUNG

(11) **EP 2 656 709 A1**
(43) Veröffentlichungstag der Anmeldung: **30.10.2013**
(21) Anmeldenummer: 13002227.0
(22) Anmeldetag: 26.04.2013
(51) Int. Cl.: A01B 59/042, A01B 59/00

(54) **Bodenbearbeitungsgerät mit zwei durch eine Schnellkupplung verbindbaren Bodenbearbeitungsvorrichtungen**

(30) Priorität: 27.04.2012 DE 202012004215 U
(71) Anmelder: Kerner Maschinenbau GmbH, 89344 Aislingen (DE)
(72) Erfinder: Maucher, Christian, 86513 Ursberg-Mindelzell (DE)
(74) Vertreter: Gallo, Wolfgang

(57) **Zusammenfassung**

An eine Zugmaschine anschließbares, einen Rahmen (101) aufweisendes Bodenbearbeitungsgerät mit wenigstens einer ersten Bodenbearbeitungsvorrichtung und ein eigenes Rahmenteil aufweisenden Bodenbearbeitungsvorrichtung, die durch eine Schnellkupplung miteinander verbindbar sind, welche mindestens eine am Rahmen (101) der ersten Bodenbearbeitungsvorrichtung oder am Rahmenteil (1) der zweiten Bodenbearbeitungsvorrichtung angeordnete Konsole (4, 5)mit zwei Taschen (14, 15) zur Aufnahme zweier am anderen Rahmenelement angebrachter Traversen (6, 7) umfaßt.

## Beschreibung

Die Erfindung betrifft ein an eine Zugmaschine anschließbares Bodenbearbeitungsgerät nach dem Oberbegriff des Anspruchs 1.

In der Landwirtschaft werden kombinierte Bodenbearbeitungsgeräte eingesetzt, die eine Mehrzahl von, bezogen auf die Fahrtrichtung, hintereinander angeordneten Bodenbearbeitungsorganen aufweisen. Ein höhenverstellbares Fahrwerk erlaubt das Fahren auf Straßen und Wegen sowie die Nutzung auf dem Acker.

Aus einem Firmenprospekt der Anmelderin ist ein solches kombiniertes Bodenbearbeitungsgerät bekannt. Ferner wird hierzu auf den Inhalt der DE 20 2011 107 598 U1 verwiesen. Das Bodenbearbeitungsgerät weist hinter einer zur Verbindung mit einem Traktor dienenden Deichsel und einer von Stützrädern gebildeten Vorderachse eine Anordnung von an drei Balken über die Arbeitsbreite verteilten Grubberzinken auf, die jeweils mit Flügelscharen bestückt sind, weiter ein hinter dieser Grubberzinkenanordnung angeordnetes höhenverstellbares Fahrwerk, das eine Hinterachse des Bodenbearbeitungsgeräts bildet, und eine Anordnung von hinter dem Fahrwerk folgenden Sternradverteilern und hinter diesen angeordnete Walzenelemente. Der Rahmen des Bodenbearbeitungsgeräts ist in Längsrichtung dreigeteilt und umfasst einen mit einer Zugdeichsel verbundenen Mittelteil und daran über Scharniergelenke mit längsverlaufender Scharnierachse verbundene Seitenteile, die mittels Hydraulikzylindern auf das Mittelteil einklappbar sind, um die Breite des Bodenbearbeitungsgeräts von der erheblichen Arbeitsbreite bei der Feldbearbeitung auf eine reduzierte Breite für Straßen- und Wegefahrten zu verringern.

Aus der EP 0 573 111 D1 1 ist eine Bodenbearbeitungsmaschine bekannt, die einen Bodenbearbeitungsgeräte tragenden Rahmen aufweist, und mit einer an einem eigenen Rahmen angeordneten Walze, wobei der Walzenrahmen mit Einhängeelementen ausgebildet ist, die in Aufnahmen des Maschinenrahmens einhängbar und dort durch einen Querstift arretierbar sind. Diese Verbindung wird dort als Schnellkupplung bezeichnet. Ihre Handhabung erscheint allerdings schwierig, denn der Arretierungsstift soll paßgenau eingesetzt und durch eine Raste arretiert sein. Ist die Maschine durch den Einsatz auf dem Acker verschmutzt, ist es erfahrungsgemäß mühsam, derartige Stiftverbindungen zu lösen, um die Teile voneinander abzukuppeln, oder auch herzustellen.

Aufgabe der Erfindung ist es daher, ein Bodenbearbeitungsgerät mit mindestens zwei kuppelbaren, jeweils einen eigenen Rahmen aufweisenden Bodenbearbeitungsvorrichtungen besser handhabbar auszugestalten.

Diese Aufgabe wird gemäß der Erfindung durch die im Anspruch 1 angegebene Anordnung mit einer Schnellkupplung zur Verbindbarkeit des Rahmens der ersten Bodenbearbeitungsvorrichtung mit dem Rahmenteil der zweiten Bodenbearbeitungsvorrichtung gelöst.

Durch den Einsatz der Schnellkupplung lässt sich die zweite Bodenverarbeitungsvorrichtung an Ort und Stelle auf dem zu bearbeitenden Acker von dem Rahmen trennen, wenn ihr Einsatz nicht erforderlich ist, und zu einem späteren Zeitpunkt wieder auf einfache Weise mit dem Rahmen verbinden, ohne dass es des Einsatzes eines Werkzeugs wie eines Schraubenschlüssels bedarf.

Vorteilhafte Ausgestaltungen der Erfindung ergeben sich aus den Unteransprüchen, der Beschreibung und den Zeichnungen.

Vorzugsweise ist das Rahmenteil manuell und/oder motorisch unterstützt von dem Rahmen lösbar und wiederverbindbar angeordnet.

Ebenso lässt sich mit Vorteil vorsehen, dass wenigstens zwei Konsolen vorhanden sind, die am Rahmen der ersten Bodenbearbeitungsvorrichtung und/oder am Rahmenteil der zweiten Bodenbearbeitungsvorrichtung angebracht sind, dass die Konsolen jeweils zwei Taschen zur Aufnahme zweier an dem hinteren Rahmenteil bzw. an dem Rahmen angebrachter Traversen aufweisen und dass wenigstens eine der Taschen mit einem Sicherungsmittel zum Fixieren der Traversen gegenüber der jeweiligen Konsole versehen ist. Beispielsweise sind im Falle von zwei Paaren Stützrädern auf einer einzigen hinteren Achse des Rahmens insgesamt vier Konsolen zur Herstellung einer Verbindung mit dem hinteren Rahmenteil vorgesehen.

Die Konsolen sind mit Vorteil jeweils durch eine Haltestange, einen Lenker oder durch eine Kolben-Zylinder-Anordnung gegenüber dem Rahmen befestigt. Wenn eine Kolben-Zylinder-Anordnung vorhanden ist, lässt sich diese verwenden, um eine motorische Schwenkbewegung durch das Hydrauliksystem des Traktors und des mit diesem verbundenen Bearbeitungsgeräts zu vollziehen.

Nach dem Konzept der Erfindung lässt sich, bezogen auf die Betriebsfahrrichtung, hinter der zweiten Bodenbearbeitungsvorrichtung noch eine dritte Bodenbearbeitungsvorrichtung anbringen, die gegenüber dem Rahmenteil der zweiten Bodenbearbeitungsvorrichtung ebenfalls durch eine Schnellkupplung lösbar und wieder mit dem Rahmenteil verbindbar angeordnet ist. Dies bedeutet, dass sich beispielsweise an dem Rahmenteil als zweite Bodenbearbeitungsvorrichtung eine Welle mit den Sternradverteilern befindet und als dritte Bodenbearbeitungsvorrichtung von der Welle mit den Sternradverteilern nochmals abtrennbar die Welle mit den Walzenelementen. Dies bedeutet vorzugsweise auch, dass sich die Welle mit den Walzenelementen unter Auskopplung der Welle mit den Sternradverteilern unmittelbar mittels denselben Schnellkupplungen des Rahmens mit diesem verbinden lässt, wenn für die Bodenbearbeitung der Einsatz der Sternradverteiler nicht erforderlich oder gewünscht ist.

Es versteht sich, dass anstelle der Walzenelemente oder der Sternradverteiler auch andere Nachlaufgeräte in einem Bodenbearbeitungsgerät eingesetzt werden können. Ebenso können anstelle von die erste Bodenbearbeitungsvorrichtung bildenden Grubberzinken auch andere oder zusätzliche, im Bereich des Rahmens angeordnete Mittel zur Bearbeitung der Bodenkrume verwendet werden.

Vorzugsweise werden Stützmittel eingesetzt, um den Rahmen gegenüber dem Rahmenteil oder sowohl den Rahmen als auch das Rahmenteil beim Lösen oder Verbinden der Konsole während des Schnellkupplungsvorgangs abzustützen, so dass ein sicherer Wechselvorgang ermöglicht wird.

Die Erfindung lässt sich sowohl bei Bodenbearbeitungsgeräten mit einem eigenen Fahrwerk einsetzen als auch bei solchen Bodenbearbeitungsgeräten, die durch ein Hubwerk mit der Zugmaschine verbunden sind.

Wenn das Bodenbearbeitungsgerät mit einem entweder eine einzige Achse oder wenigstens eine Vorder- und eine Hinterachse umfassenden Fahrwerk ausgestattet ist, ist die wenigstens eine erste Bodenbearbeitungsvorrichtung in Betriebsfahrrichtung vor der einzigen Achse bzw. vor der Hinterachse angeordnet, während die zweite Bodenbearbeitungsvorrichtung in Betriebsfahrrichtung hinter der einzigen Achse bzw. hinter der Hinterachse angeordnet ist.

Nachstehend wird die Erfindung in einem Ausführungsbeispiel anhand der Zeichnungen näher beschrieben. Es zeigen:
- Fig. 1: eine Seitenansicht eines mit einem Fahrwerk ausgestatteten Bodenbearbeitungsgeräts mit einem Rahmen und einem von dem Rahmen über Konsolen trennbaren, eine Walzenanordnung umfassenden Rahmenteil im verbundenen Zustand,
- Fig. 2: eine Seitenansicht des Bodenbearbeitungsgeräts gemäß Fig. 1, wobei der Rahmen und das Rahmenteil voneinander getrennt sind,
- Fig. 3: das über zwei Konsolen an den Rahmen des Bodenbearbeitungsgeräts ankuppelbare Rahmenteil in einer Ansicht in Fahrtrichtung,
- Fig. 4: das Rahmenteil gemäß Fig. 3, getrennt von den Konsolen, in der Draufsicht,
- Fig. 5: das Rahmenteil und eine der Konsolen gemäß Fig. 4 in einer Seitenansicht,
- Fig. 6: die Konsole in der Vorderansicht und
- Fig. 7: die Konsole in perspektivischer Ansicht.

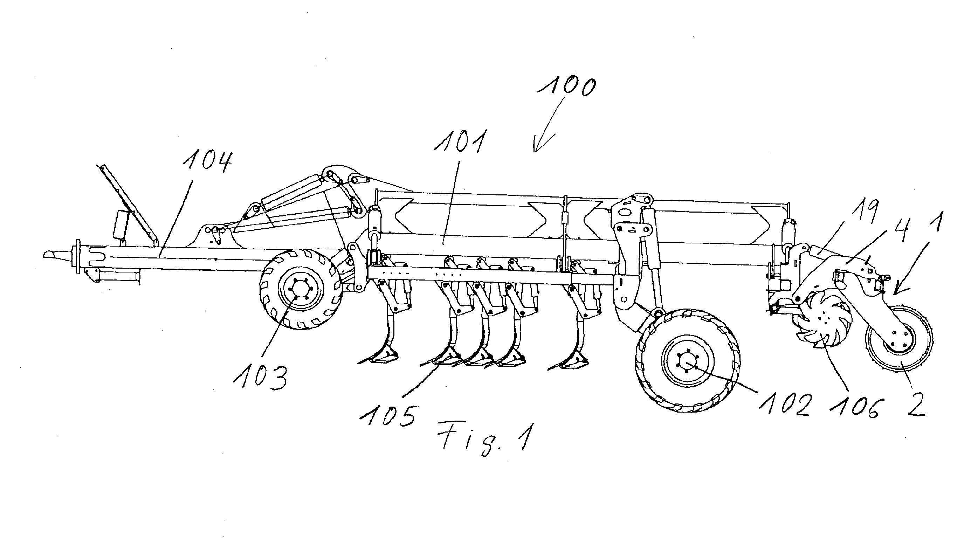

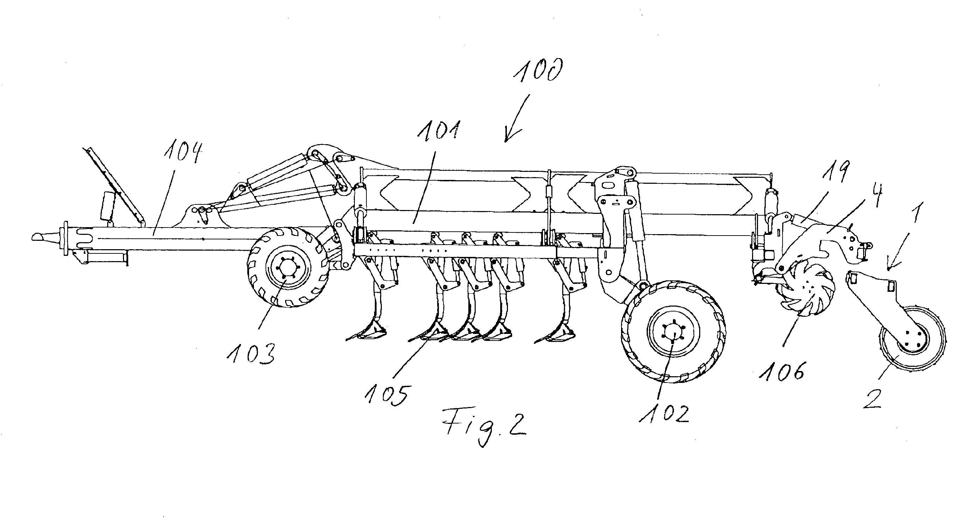

Ein aus der der DE 20 2011 107 598 U1 bekanntes Bodenbearbeitungsgerät 100 (Fig. 1, 2) weist einen Rahmen 101 mit einem höhenverstellbaren Fahrwerk 102, vorderen Stützrädern 103 und einer Deichsel 104 zum Anhängen an eine Zugmaschine auf. An dem Rahmen 101 sind Bodenbearbeitungswerkzeuge, beispielsweise Grubberzinken 105, Sternradverteiler 106 oder andere Einebnungsorgane angeordnet.

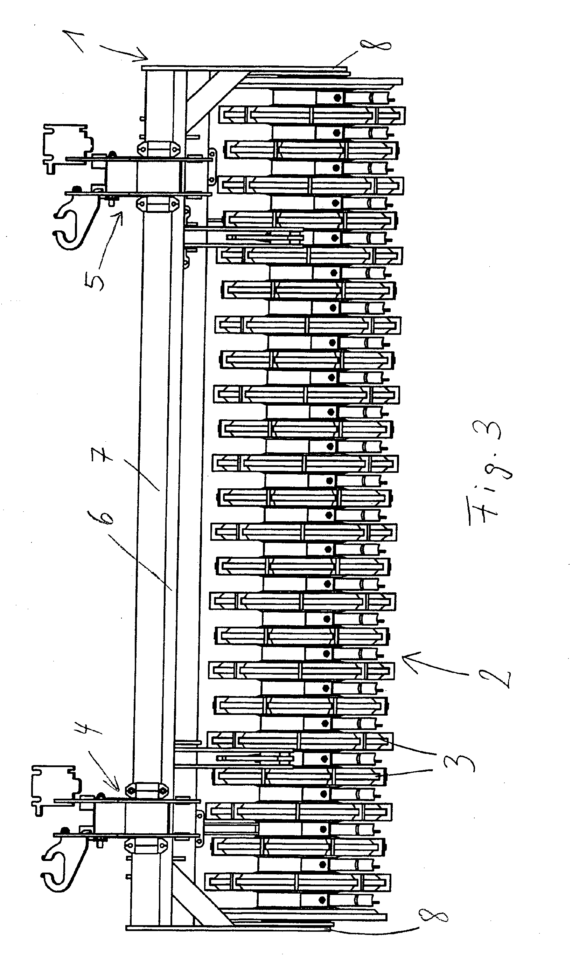

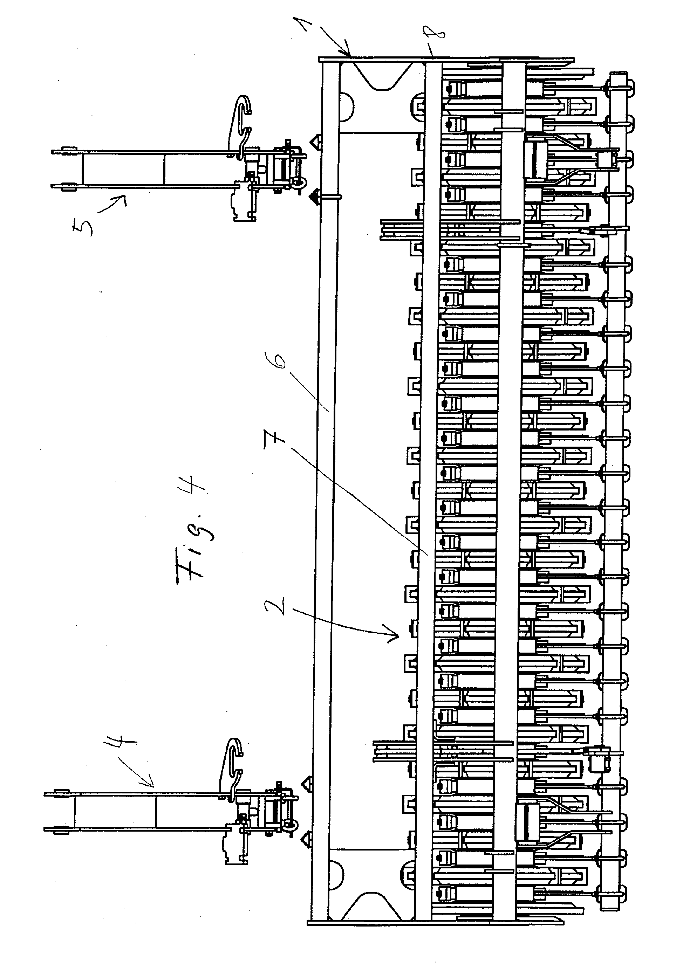

Gemäß der vorliegenden Erfindung ist das Bodenbearbeitungsgerät 100 dadurch zusätzlich ausgestaltet, dass an einem von dem Rahmen 101 lösbaren Rahmenteil 1 (Fig. 3 4) eine Walzenanordnung 2 mit einer Vielzahl von Walzelementen 3 angeordnet ist. Über Konsolen 4, 5 ist das Rahmenteil 1 durch zwei Traversen 6, 7 mit dem Rahmen 101 verbunden (Fig. 1, 3) oder von diesem gelöst (Fig. 2, 4).

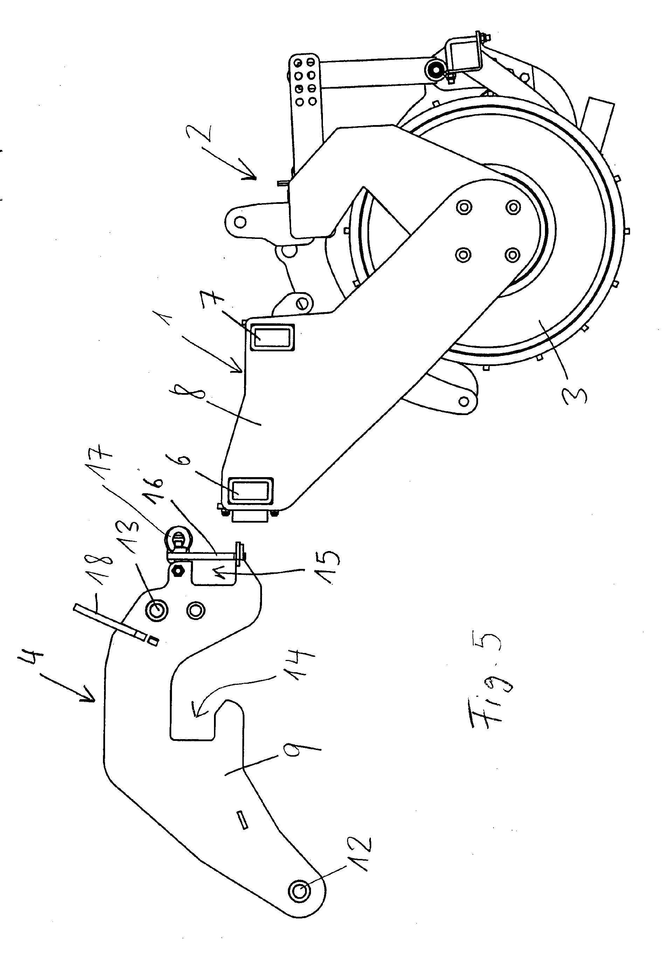

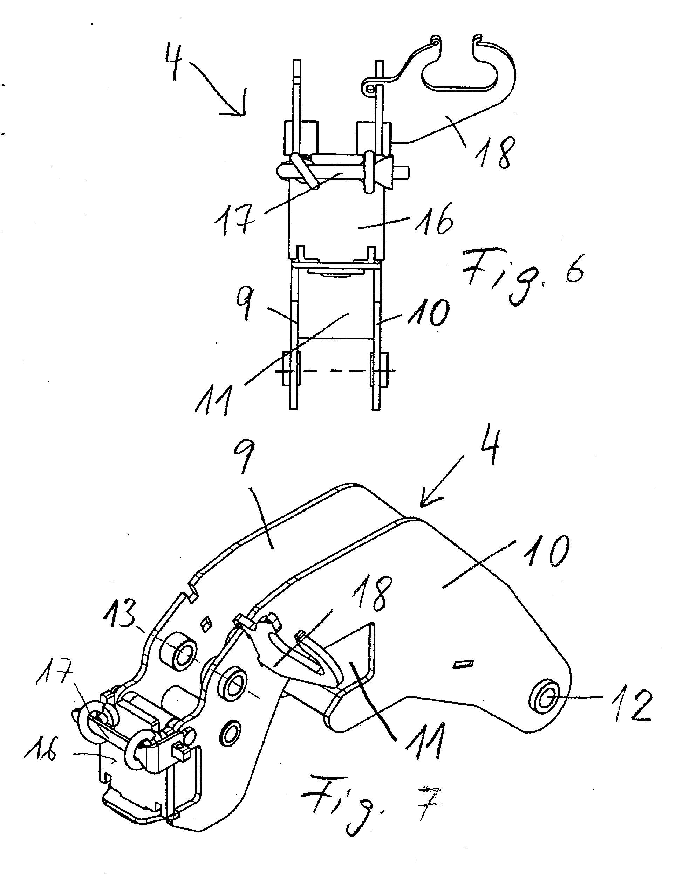

Das Rahmenteil 1 umfasst Seitenwangen 8 (Fig. 5), mit der die Traversen 6, 7 verbunden sind. Die Konsolen 4, 5 weisen jeweils Seitenbleche 9, 10 (Fig. 6, 7) auf, die über ein Bodenblech 11 miteinander verbunden sind. Über eine Schwenkachse 12 sind die Konsolen 4, 5 mit dem Rahmen 101 verbunden und über Lenker oder Befestigungsstangen 19, die im Bereich der Konsolen 4, 5 jeweils an einer Achse 13 angelenkt ist, lassen sich die Konsolen 4, 5 gegenüber dem Rahmen 101 fixieren, wenn das Rahmenteil 1 mit dem Rahmen 101 verbunden ist.

Zur Herstellung einer festen Verbindung zu dem Rahmenteil 1 weisen die Konsolen 4, 5 in ihren Seitenblechen 9, 10 jeweils Taschen 14, 15 auf, die zur Aufnahme der Traversen 6 bzw. 7 vorgesehen sind. Durch eine Bewegung in Fahrtrichtung bzw. entgegen der Fahrtrichtung des Bodenbearbeitungsgeräts 100 in Verbindung mit einer leichten Schwenkbewegung der Konsolen 4, 5 lassen sich die Traversen 6, 7 in deren Taschen 14, 15 platzieren. Anschließend wird die Traverse 7 in der Tasche 15 mittels einer Fixierplatte 16 verriegelt. Die Fixierplatte 16 ist ihrerseits durch einen Bolzen 17 gegen Lösen gesichert. An der Seite der Konsolen 4, 5 lassen sich Abstützelemente 18 vorsehen, die die Befestigungsstangen 19 aufnehmen, wenn das Rahmenteil 1 von dem Rahmen 101 gelöst ist.

Durch die umgekehrte Abfolge der oben beschriebenen Schritte lässt sich das Rahmenteil 1 jederzeit wieder einfach von dem Rahmen 101 trennen.

Wenn anstelle der Lenker oder Befestigungsstangen 19 Kolben-Zylinder-Anordnungen vorgesehen sind, lassen sich diese nutzen, um die Konsolen 4, 5 gegenüber dem Rahmen 101 bzw. dem Rahmenteil 1 zu verschwenken.

## Patentansprüche

1. An eine Zugmaschine anschließbares, einen Rahmen (101) aufweisendes Bodenbearbeitungsgerät (100) mit wenigstens einer ersten Bodenbearbeitungsvorrichtung und einer zweiten Bodenbearbeitungsvorrichtung, wobei die zweite Bodenbearbeitungsvorrichtung ein eigenes Rahmenteil (1) aufweist, das gegenüber dem Rahmen (101) der wenigstens einen ersten Bodenbearbeitungsvorrichtung durch eine Schnellkupplung (4, 5) lösbar und wieder mit dem Rahmen (101) verbindbar angeordnet ist, **dadurch gekennzeichnet, dass** der Rahmen (101) und/oder das Rahmenteil (1) zur Bildung der Schnellkupplung in dem Bereich, in dem der Rahmen (101) und das Rahmenteil (1) miteinander verbunden sind, mit wenigstens einer Konsole (4, 5) zur Herstellung einer form- und/oder kraftschlüssigen Verbindung miteinander ausgestattet ist, und dass die wenigstens eine Konsole (4, 5) am Rahmen (101) der ersten Bodenbearbeitungsvorrichtung oder am Rahmenteil (1) der zweiten Bodenbearbeitungsvorrichtung angebracht ist und Taschen (14, 15) zur Aufnahme zweier am jeweils anderen von Rahmenteil (1) und Rahmen (101) angebrachter Traversen (6, 7) aufweisen und dass wenigstens eine der Taschen (14, 15) mit einem Sicherungsmittel (16, 17) zum Fixieren der Traverse (6, 7) gegenüber der jeweiligen Konsole (4, 5) versehen ist.

2. Bodenbearbeitungsgerät nach Anspruch 1, **dadurch gekennzeichnet, dass** die wenigstens eine Konsole (4, 5) schwenkbar und/oder in Richtung der Längsachse des Bodenbearbeitungsgeräts (100) verschiebbar an dem Rahmen (101) befestigt ist.

3. Bodenbearbeitungsgerät nach Anspruch 1 oder 2, **dadurch gekennzeichnet, dass** wenigstens zwei Konsolen (4, 5) vorgesehen sind und beide entweder am Rahmen (101) der ersten Bodenbearbeitungsvorrichtung oder am Rahmenteil (1) der zweiten Bodenbearbeitungsvorrichtung angebracht sind oder von denen eine am Rahmen (101) der ersten Bodenbearbeitungsvorrichtung und die andere am Rahmenteil (1) der zweiten Bodenbearbeitungsvorrichtung angebracht ist.

4. Bodenbearbeitungsgerät nach einem der Ansprüche 1 bis 3, **dadurch gekennzeichnet, dass** die oder jede Konsole (4, 5) durch eine Haltestange (19), einen Lenker oder durch eine Kolben-Zylinder-Anordnung an dem Rahmen (101) bzw. dem Rahmenteil (1) befestigt ist.

5. Bodenbearbeitungsgerät (100) nach einem der Ansprüche 1 bis 4, **dadurch gekennzeichnet, dass** das Rahmenteil (1) manuell und/oder motorisch unterstützt von dem Rahmen (101) lösbar und wiederverbindbar angeordnet ist.

6. Bodenbearbeitungsgerät nach einem der Ansprüche 1 bis 5, **dadurch gekennzeichnet, dass**, bezogen auf die Betriebsfahrrichtung, hinter der zweiten Bodenbearbeitungsvorrichtung eine dritte Bodenbearbeitungsvorrichtung vorgesehen ist, die gegenüber dem Rahmenteil (1) der zweiten Bodenbearbeitungsvorrichtung ebenfalls durch eine gleichartige Schnellkupplung lösbar und wieder mit dem Rahmenteil (1) verbindbar angeordnet ist.
